# EUROPEAN PATENT SPECIFICATION

(11) **EP 3 160 864 B1**
(45) Date of publication and mention of the grant of the patent: **29.08.2018**
(21) Application number: 15753762.2
(22) Date of filing: 30.06.2015
(51) Int. Cl.: B65D 75/32, B65D 85/60

(54) **SEALED PACKAGING FOR A CONFECTIONERY PRODUCT**
ABGEDICHTETE VERPACKUNG FÜR EIN SÜSSWARENPRODUKT
EMBALLAGE SCELLÉ POUR UN PRODUIT DE CONFISERIE

(30) Priority: 30.06.2014 IT TO20140521
(43) Date of publication of application: 03.05.2017
(73) Proprietor: Soremartec S.A., 2632 Findel (LU); Ferrero S.p.A., 12051 Alba (Cuneo) (IT)
(72) Inventor: TERRASI, Giuseppe, I-12050 Benevello (Cuneo) (IT)
(74) Representative: Rambelli, Paolo
(86) International application number: PCT/IB2015/054896
(87) International publication number: WO 2016/001829

(56) References cited:
- EP-A1- 1 046 579
- WO-A1-2009/084045
- GB-A- 2 130 546

## Description

The present invention relates to packaging for a confectionery product, such as, in particular, a praline or the like, in which the food product is wrapped in a sealed wrapper, mostly adhering to the outer surface of the product, so as to limit the volume of air in contact with the product inside the wrapper and avoid, or in any case limit, the phenomena of exchange between the atmosphere inside the wrapper and the external atmosphere.

This type of sealed wrapper is evidently desirable for the purpose of improving the preservation of the organoleptic characteristics of the packaged product, particularly as regards preservation from oxidation phenomena. However, this type of wrapper is not, in practice, used commercially for packaging high quality confectionery products such as pralines, for which, although they are produced on a large industrial scale, it is desirable to provide packaging which enhances their value, and is therefore as similar as possible to hand-made packaging.

Thus, a form of packaging typical of high quality pralines, such as the Rocher® pralines made by Ferrero S.p.A., comprises a single sheet, typically of aluminium, which is wrapped closely around the product and whose peripheral edges are pressed down on to the product so as to form a closed, but not sealed, wrapper, and a case (a pleated cup) whose base surface is made to adhere to the pressed-down edges of the wrapper to retain the product inside the cup, thereby producing a form of packaging and presentation typical of confectionery products.

In order to form packaging with a sealed wrapper, as mentioned above, it is desirable for the wrapper to adhere as closely as possible to the body of the product, in order to limit the internal air volume, while also emphasizing the shape of the product.

In this context, WO 2012/098524 describes a method for packaging a praline in a sealed wrapper, adhering to the praline as far as possible, and using two wrapper sheets. The first sheet is shaped by pressing into a beaker-like configuration with a radial annular flange surrounding its mouth; the product is inserted into the first sheet shaped in this way, and the wrapper is then constricted below the flange, using an iris-like tool; a second wrapper sheet, generally flat, is then bonded or glued to the annular flange, forming a sealed wrapper.

In one embodiment, the second wrapper sheet can take the form of a pleated cup, the base of which is connected to the annular flange, with the side wall of the cup initially facing in the opposite direction from the product; this side wall is then folded over towards the product, forming packaging which includes the pleated cup as an integral part of the packaging.

This solution requires the use of sheet materials which have barrier properties and are preferably heat-sealable, for example multi-layer sheets such as laminates of aluminium/plastic material, paper/plastic material, or paper/metallized plastic material, and it cannot be used to produce packaging which, in terms of its appearance, is presented to the consumer as a typical confectionery product in which the pleated cup is made of paper material.

WO2009/084045 A1 describes a packaging according to the pre-characterising part of claim 1.

The object of the invention is primarily to provide sealed packaging which, in terms of its appearance, takes the form of typical packaging of the hand-made or confectionery type, and which can therefore be used, particularly for the packaging of pralines or the like, as a replacement for the non-sealed packaging which is routinely used and has been described previously, thus meeting the requirements and expectations of the consumer.

The invention also has the aim of providing packaging which, within the scope of the primary object outlined above, can easily be opened by the consumer for the removal of the product.

In view of these objects, the invention provides a food product packaging and a method for its preparation, having the characteristics defined in the claims below, which form an integral part of the present description.

Further characteristics and advantages of the packaging according to the invention will be evident from the following detailed description, provided by way of non-limiting example with reference to appended drawings, in which:
- Fig. 1 is a sectional view of the packaging including the corresponding product; and
- Fig. 2 is a perspective view in partial section of the packaging of Fig. 1, in which the cup is shown as transparent, simply for the sake of greater clarity of representation.

With reference to the drawings, the packaging comprises a first wrapper sheet 2, typically shaped by a pressing process, so as to wrap and substantially surround the whole body of the product P introduced into it.

The sheet 2 is shaped so as to have, at its mouth which provides access to the inner cavity in which the product P is housed, an annular radial flange 4 which is preferably placed substantially flush with the end of the surface of the product P.

In the illustrated configuration, in which the product P is a praline of substantially spherical shape, the sheet 2 is shaped with a cross section resembling the Greek letter Ω, so that the wrapper sheet can adhere as closely as possible to the outer surface of the product P. This configuration can be obtained, for example, by following the method described in WO 2012/098524.

In particular, according to this method the first sheet 2 is initially shaped in a beaker configuration, comprising a base portion, which is substantially complementary to a base portion of the surface of the product, and a tubular portion, which extends above the top of the product when the latter is inserted into the sheet shaped in this way, and which forms a mouth for the introduction of the product and a terminal portion in the form of an annular flange surrounding the mouth.

When the product has been inserted into the first shaped sheet, the shaped sheet being kept with its mouth facing upwards, an operation of constricting the region of the tubular portion located above the top of the product is performed, preferably while exerting a pressure on the annular flange which can secure the edges of the flange or limit its radial sliding, so as to cause the adhesion of the tubular wall to a substantial portion of the top surface of the product.

In WO 2012/098524, the aforesaid constriction operation is performed using an iris shutter. However, it is to be understood that this constriction, when desired or necessary, can equally well be performed by other means, for example by using a mandrel with petals of the type described in WO 2008/018008, also in the name of the present applicant, although the latter tool is less advantageous than the aforesaid iris shutter tool for achieving close adhesion of the wrapper to the product.

Additionally, although the method and equipment described in WO 2012/098524 are particularly advantageous for the packaging of products of substantially spherical shape, or products with portions which are crown-shaped or tapered in their part facing the mouth of the wrapper, it is to be understood that, since the packaging proposed by the invention is not in any way limited to the packaging of products having this configuration, the aforesaid constriction operation is purely optional.

Thus, for example, in the case of a praline of frustoconical or frustopyramidal shape, the wrapper sheet 2 will be configured by pressing into a shape substantially complementary to the side wall of the praline, with the flange 4 substantially flush with the surface of the larger base of the praline.

As mentioned above, however, it is important to configure the first wrapper sheet with a radial flange, indicated by 4, which is substantially flat.

A second substantially flat wrapper sheet 6 is then connected, in its peripheral annular region, to the flange 4. This connection can be provided by heat-sealing, ultrasonic welding, infrared welding, or gluing, thus forming a closed and sealed wrapper.

The sheets 2 and 6 may be made from a wide range of materials, provided that they are suitable for contact with food; preferably, they are materials having barrier properties in respect of oxygen transfer.

The materials used comprise single-layer materials, such as aluminium foil, plastic materials such as polypropylene or more preferably polyester (PET), or multi-layer materials such as composite materials or materials co-extruded as laminates of aluminium/plastic material, paper/plastic material, or paper/metallized plastic material; a preferred material may be a laminate of aluminium foil with a sheet of polyester (PET).

In particular, it may be preferable to use materials suitable for heat-sealing, so that the two sheets 2 and 6 can be coated on their sides intended to face the product with a heat-sealing lacquer or a layer of heat-sealing material.

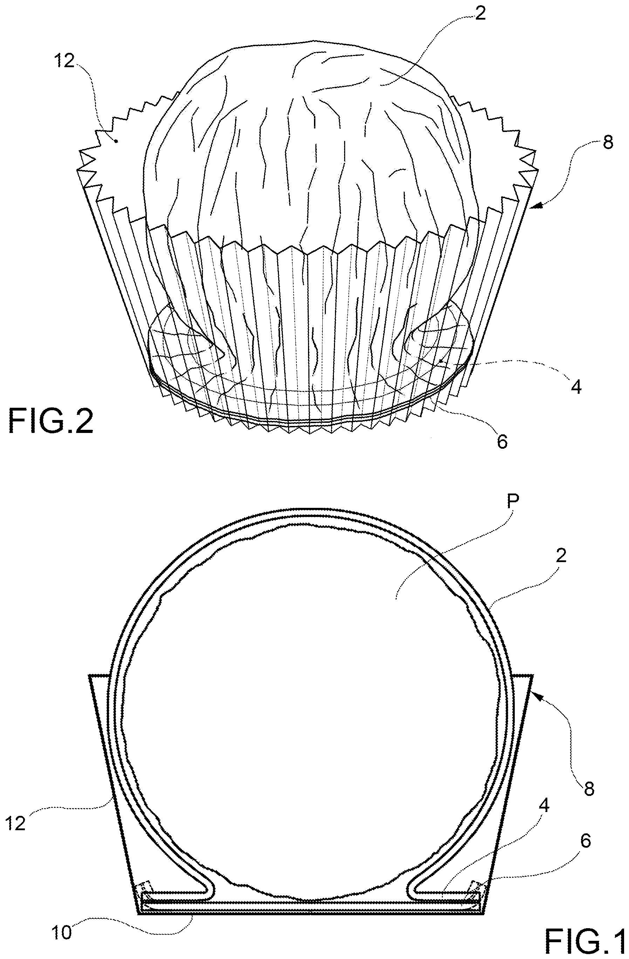

The packaging further comprises a cup-shaped body having a flat base wall 10 and a side wall 12, preferably pleated. The base wall 10 of the cup, typically of circular shape, has dimensions such that the sheet 6, forming the closing element of the wrapper and having a perimetric edge generally matching the perimetric edge of the flange 4, can be inserted so as to bear against the aforesaid base wall 10. The size (diameter) of the base wall 10 of the cup may be substantially equal to or slightly smaller than the sizes (diameters) of the sheet 6 and the corresponding flange 4, or may be greater than them, in which case the sheet 6 and the corresponding flange 4 have a curved annular peripheral region in contact with the side wall 12 of the cup, as indicated by the broken line in Figure 1. The side wall 12 of the cup, generally flared, in this position surrounds the shaped sheet 2.

The base wall 10 is connected to the sheet 6, preferably by gluing and preferably with a hot-melt glue.

The gluing may take place over the whole surface of the base 10 and the sheet 6, or solely on an annular peripheral region thereof, or solely on spots or portions of an annular peripheral region thereof.

According to a characteristic of the invention, the adhesive force between the base surface 10 of the cup and the outer surface of the sheet 6 is greater than the adhesive force between the flange 4 and the wrapper sheet 6. Thus the cup 8 not only has a function in terms of appearance, but also acts as a graspable element for facilitating the opening of the packaging. For this purpose, the consumer intending to remove the product P from the packaging can grasp the side wall of the cup, fold it over on to the opposite side from the product, and then exert a tractive force on this side wall, which, owing to the greater adhesive force between the base 10 and the sheet 6, causes the sheet 6 to be detached from the flange 4, thus enabling the packaging to be opened.

In particular, the adhesive force exerted by the glue between the surface of the cup and the sheet 6 may be from 1.2 to 2 or more times greater than the adhesive force between the flange 4 and the surface of the sheet 6.

In the preferred embodiment, the cup 8 is made from a conventional paper material which is inexpensive and easily pleatable. In fact, since the cup 8 plays no part in sealing the packaging, any of the paper materials commonly used in the field of hand-made goods can be used for this cup.

Thus the invention provides a novel packaging in a sealed wrapper which can easily be used to replace conventional non-sealed packaging, while making it possible to meet the requirements in terms of appearance which are of considerable importance for consumer choice, and, naturally, while improving the preservation of the organoleptic characteristics of the products over time.

It is to be understood that, provided that the principle of the invention is retained, the details of application and the forms of embodiment can be varied widely from what has been described and illustrated by way of non-limiting example, without departure from the scope of the claims attached below.

Thus, in particular, it is to be understood that the shape of the product may be varied considerably from that which is illustrated, with consequent variations in the configuration of the wrapper; it is also to be understood that the materials of the packaging can be varied from those specifically mentioned, according to the requirements for specific packaging.

## Claims

1. Food product packaging comprising a food product (P) in a sealed wrapper of sheet material, comprising a first sheet (2) shaped in a receiving configuration adapted to contain the product, having an end edge in the shape of a flange (4), a second sheet (6) adhered to said flange (4) to form a sealed wrapper surrounding the product (P), and a body of sheet material (8) in the shape of a cup with a base (10) and a side wall (12), **characterised in that** said base (10) is adhered to said second sheet (6) and the adhesive force between said base (10) and said second sheet (6) is greater than the adhesive force between the second sheet (6) and said flange (4), so that a force tending to separate said body from the packaging causes the detachment of said second sheet (6) from the flange (4) with the opening of the packaging.

2. Packaging according to Claim 1, **characterized in that** said first (2) and second (6) sheets are constituted by a single layer sheet of plastic material suitable for contact with food or by a multilayer sheet of aluminium/plastic material, paper/plastic material, or paper/metalized plastic material, optionally provided on the side facing the food product (P) with a heat-sealable coating.

3. Packaging according to Claim 2, **characterized in that** said first (2) and second (6) sheets are constituted by a film of polypropylene or polyester, particularly polyethylene terephthalate, or by a laminate of aluminium and polyester, preferably polyethylene terephthalate.

4. Packaging according to any of Claims 1 to 3, **characterized in that** said cup-shaped body (8) is of paper material with the side wall (12) preferably pleated.

5. Packaging according to any of the preceding claims, **characterized in that** said cup-shaped body (8) is adhered to said second sheet (6) by means of a hot-melt glue.

6. Packaging according to any of the preceding claims, **characterized in that** the adhesive force between said base (10) of the cup-shaped body (8) and said second sheet (6) is equal to 1.2-2 times the adhesive force between said second sheet (6) and said flange (4).

7. Packaging according to any of the preceding claims, **characterized in that** said second sheet (6) is adhered to said flange (4) by heat sealing, ultrasonic welding, infrared welding or gluing.

8. Packaging according to any of the preceding claims, **characterized in that** said food product (P) is a praline of substantially spherical shape and said first sheet (2) is shaped so as to present, adjacent to said flange (4), a restricted opening section so as to adhere closely to the product (P).

9. Method for the production of a packaging according to any of the preceding claims, comprising the operations of:
- shaping said first sheet (2) into a beaker shape having an annular flange (4) adjacent to its mouth;
- inserting the product (P) into the sheet (2) shaped in this way;
- connecting said second sheet (6) to said annular flange (4) so as to form a closed wrapper around said product (P); and
- connecting, preferably by gluing, said second sheet (6) to the base surface of a cup-shaped body (8).

10. Method according to Claim 9, **characterized in that** said product is of substantially spherical shape, comprising the operation of making a constriction in said first sheet (2) in a position immediately adjacent to said annular flange (4), so as to cause the adhesion of said first sheet (2) to a substantial portion of the surface of the product (P).

## Patentansprüche

1. Lebensmittelverpackung, die ein Lebensmittelprodukt (P) in einer dichten Verpackung aus einem Bogenmaterial aufweist, mit einem ersten Bogen (2), der in eine Aufnahmestruktur geformt ist, die angepasst ist zum Aufnehmen des Produkts, der einen Endrand in der Form eines Flansches (4) aufweist, einem zweiten Bogen (6), der an den Flansch (4) gehaftet ist zum Bilden einer dichten Verpackung, die das Produkt (P) umgibt, und einem Körper aus einem Bogenmaterial (8) in Form einer Tasse mit einer Basis (10) und einer Seitenwand (12), **dadurch gekennzeichnet, dass** die Basis (10) an den zweiten Bogen (6) gehaftet ist und die Haftkraft zwischen der Basis (10) und dem zweiten Bogen (6) größer ist als die Haftkraft zwischen dem zweiten Bogen (6) und dem Flansch (4), so dass eine Kraft, die dazu tendiert, den Körper von der Verpackung zu trennen, das Ablösen des zweiten Bogens (6) von dem Flansch (4) bei dem Öffnen der Verpackung bewirkt.

2. Verpackung nach Anspruch 1, der gekennzeichnet, dass der erste (2) und der zweite (6) Bogen durch einen Einzelschicht-Bogen aus einem Kunststoffmaterial, das geeignet ist zum Berühren von Lebensmitteln, oder durch einen Mehrschicht-Bogen aus einem Aluminium-/Kunststoffmaterial, einem Papier-/Kunststoffmaterial oder einem Papier-/metallischen Kunststoffmaterial gebildet sind, die optional auf der Seite, die auf das Lebensmittelprodukt (P) gerichtet ist, mit einer heißsiegelbaren Beschichtung versehen sind.

3. Verpackung nach Anspruch 2, **dadurch gekennzeichnet, dass** der erste (2) und der zweite (6) Bogen durch eine Folie aus Polypropylen oder Polyester, insbesondere Polyethylen-Terephthalat, oder durch einen Schichtstoffverbund aus Aluminium und Polyester, bevorzugt Polyethylen-Terephthalat, gebildet sind.

4. Verpackung nach einem der Ansprüche 1 bis 3, **dadurch gekennzeichnet, dass** der tassenförmige Körper (8) aus einem Papiermaterial ist, wobei die Seitenwand (12) bevorzugt gefaltet ist.

5. Verpackung nach einem der vorhergehenden Ansprüche, **dadurch gekennzeichnet, dass** der tassenförmige Körper (8) an den zweiten Bogen (6) mittels eines heißschmelzenden Klebstoffs gehaftet ist.

6. Verpackung nach einem der vorhergehenden Ansprüche, **dadurch gekennzeichnet, dass** die Haftkraft zwischen der Basis (10) des tassenförmigen Körpers (8) und dem zweiten Bogen (6) gleich 1,2-2 mal die Haftkraft zwischen dem zweiten Bogen (6) und dem Flansch (4) beträgt.

7. Verpackung nach einem der vorhergehenden Ansprüche, **dadurch gekennzeichnet, dass** der zweite Bogen (6) an den Flansch (4) durch Heißsiegeln, Ultraschallschweißen, Infrarotschweißen oder Verkleben gehaftet ist.

8. Verpackung nach einem der vorhergehenden Ansprüche, **dadurch gekennzeichnet, dass** das Lebensmittelprodukt (P) eine Praline in einer im Wesentlichen Kugelform ist, und der erste Bogen (2) derart geformt ist, dass er neben dem Flansch (4) einen beschränkten Öffnungsabschnitt präsentiert, so dass er eng an dem Produkt (P) haftet.

9. Verfahren für die Herstellung einer Verpackung nach einem der vorhergehenden Ansprüche, mit den folgenden Arbeitsgängen:
- Formen des ersten Bogens (2) in eine Becherform, die einen ringförmigen Flansch (4) an dessen Öffnung angrenzend aufweist;
- Einsetzen des Produkts (P) in den Bogen (2), der auf diese Art und Weise geformt ist;
- Verbinden des zweiten Bogens (6) mit dem ringförmigen Flansch (4), so dass eine geschlossene Verpackung um das Produkt (P) herum gebildet wird; und
- Verbinden, bevorzugt durch Kleben, des zweiten Bogens (6) mit der Basisfläche eines tassenförmigen Körpers (8).

10. Verfahren nach Anspruch 9, **dadurch gekennzeichnet, dass** das Produkt eine im Wesentlichen Kugelform aufweist, mit dem Arbeitsgang, eine Beschränkung in dem ersten Bogen (2) an einer Position unmittelbar an den ringförmigen Flansch (4) angrenzend vorzusehen, so dass er das Anhaften des ersten Bogens (2) an einen wesentlichen Bereich der Oberfläche des Produkts (P) bewirkt.

## Revendications

1. Emballage de produit alimentaire comprenant un produit alimentaire (P) dans une enveloppe scellée en matériau en feuille, comprenant une première feuille (2) formée selon une configuration de réception adaptée pour contenir le produit, ayant un bord d'extrémité en forme de collerette (4), une seconde feuille (6) collée à ladite collerette (4) pour former une enveloppe scellée entourant le produit (P), et un corps de matériau en feuille (8) en forme de coupelle avec une base (10) et une paroi latérale (12), **caractérisé en ce que** ladite base (10) est collée à ladite seconde feuille (6) et la force adhésive entre ladite base (10) et ladite seconde feuille (6) est supérieure à la force adhésive entre la seconde feuille (6) et ladite collerette (4), de telle sorte qu'une force visant à séparer ledit corps de l'emballage amène la seconde feuille (6) à se détacher de la collerette (4) à l'ouverture de l'emballage.

2. Emballage selon la revendication 1, **caractérisé en ce que** lesdites première (2) et seconde (6) feuilles sont constituées par une feuille monocouche de matière plastique adaptée pour un contact avec un aliment ou par une feuille multicouche d'aluminium/matière plastique, de papier/matière plastique, ou de papier/matière plastique métallisée, éventuellement prévue sur la face orientée vers le produit alimentaire (P) avec un revêtement thermoscellable.

3. Emballage selon la revendication 2, **caractérisé en ce que** lesdites première (2) et seconde (6) feuilles sont constituées par un film de polypropylène ou de polyester, en particulier, de téréphtalate de polyéthylène, ou par un stratifié d'aluminium et de polyester, de préférence, de téréphtalate de polyéthylène.

4. Emballage selon l'une quelconque des revendications 1 à 3, **caractérisé en ce que** ledit corps en forme de coupelle (8) est un matériau de papier avec la paroi latérale (12) de préférence plissée.

5. Emballage selon l'une quelconque des revendications précédentes, **caractérisé en ce que** ledit corps en forme de coupelle (8) est attaché à ladite seconde feuille (6) au moyen d'une colle thermofusible.

6. Emballage selon l'une quelconque des revendications précédentes, **caractérisé en ce que** la force adhésive entre ladite base (10) du corps en forme de coupelle (8) et ladite seconde feuille (6) est égale à 1,2 à 2 fois la force adhésive entre ladite seconde feuille (6) et ladite collerette (4).

7. Emballage selon l'une quelconque des revendications précédentes, **caractérisé en ce que** ladite seconde feuille (6) est attachée à ladite collerette (4) par thermoscellage, soudage par ultrasons, soudage par infrarouge ou collage.

8. Emballage selon l'une quelconque des revendications précédentes, **caractérisé en ce que** ledit produit alimentaire (P) est un praliné de forme sensiblement sphérique et ladite première feuille (2) est façonnée de sorte à présenter, adjacente à ladite collerette (4), une section d'ouverture restreinte de sorte à adhérer étroitement au produit (P).

9. Procédé pour la production d'un emballage selon l'une quelconque des revendications précédentes, comprenant les opérations de :
- façonnage de ladite première feuille (2) en une forme de timbale ayant une collerette annulaire (4) adjacente à son ouverture ;
- insertion du produit (P) dans la feuille (2) façonnée de cette manière ;
- liaison de ladite seconde feuille (6) à ladite collerette annulaire (4) de sorte à former une enveloppe fermée autour dudit produit (P) ; et
- liaison, de préférence par collage, de ladite seconde feuille (6) à la surface de base d'un corps en forme de coupelle (8).

10. Procédé selon la revendication 9, **caractérisé en ce que** ledit produit est de forme sensiblement sphérique, comprenant l'opération consistant à réaliser un étranglement dans ladite première feuille (2) dans une position immédiatement adjacente à ladite collerette annulaire (4), de sorte faire adhérer ladite première feuille (2) à une partie substantielle de la surface du produit (P).
